**Europäisches Patentamt**

**European Patent Office**

**Office européen des brevets**

(19)

(11) Publication number: **0 217 553**
**B1**

# (12) EUROPEAN PATENT SPECIFICATION

(45) Date of publication of the patent specification:
**25.01.89**

(51) Int. Cl.⁴: **B01J 29/38**
// B01J38/18, B01J38/12

(21) Application number: **86306788.0**

(22) Date of filing: **02.09.86**

(54) Reactivation of noble metal-containing zeolite catalyst materials.

(30) Priority: **09.09.85 US 774214**

(43) Date of publication of application:
**08.04.87 Bulletin 87/15**

(45) Publication of the grant of the patent:
**25.01.89 Bulletin 89/4**

(84) Designated Contracting States:
**BE DE FR GB IT NL SE**

(56) References cited:
**EP-A- 0 045 333**
**US-A- 4 555 495**

(73) Proprietor: **MOBIL OIL CORPORATION, 150 East 42nd Street, New York New York 10017(US)**

(72) Inventor: **Krishnamurthy, Sowmithri, 18 Patricia Lane, Glenn Mills Pennsylvania 19342(US)**

(74) Representative: **Cooper, John Anthony et al, Mobil Court 3 Clements Inn, London WC2A 2EB(GB)**

## Description

The invention relates to a process of reactivating catalysts. In particular, it relates to the reactivation of noble metal-containing zeolite catalysts which have been deactivated by coke build-up. Catalysts which may be reactivated by the process of the present invention include those that have become deactivated during hydrocarbon hydroprocesses, such as the reforming or catalytic dewaxing of hydrocarbon feedstocks.

Reactivation of platinum catalysts utilized in hydrocarbon hydroprocessing procedures such as reforming is known in the art. Processes which utilize chlorine and oxygen in catalyst reactivation are particularly well-known. For example, U.S. Patent No. 2 906 702 to Brennan et al. discloses a method of restoring an alumina-supported platinum catalyst after deactivation occurring during the reforming of hydrocarbons. This method teaches contacting a deactivated platinum-alumina catalyst with a gaseous chlorine, fluorine, or other halogen or halogen-affording substance at an elevated temperature. U.S. Patent No. 3 134 732 to Kearby et al. teaches a method for reactivating noble metal catalyst supported on alumina by contacting the catalyst with halogen-containing gas, stripping excess halogen therefrom, and subjecting the resulting catalyst to a reduction step with a hydrogen-containing gas. In this disclosure, the agglomerated metal is present on the surface of the alumina as small crystallites. It is also known in the art to regenerate noble metal- and platinum group metal-containing zeolite catalysts. Regeneration of noble metal-loaded zeolite catalysts requires certain procedural modifications to regain the activity of the metal. U.S. Patent No. 3,986,982 to Crowson et al. treats deactivated platinum group metal-loaded zeolites by contacting them with a stream of an inert gas containing from 0.5 to 20 percent volume of free oxygen and from 5 to 500 ppm volume of chlorine as chlorine, HCl, or an organic chlorine-containing material. The resulting catalyst is purged to remove residual oxygen and chlorine and then reduced in a stream of hydrogen at 200 to 600°C.

The treatment of noble metal-containing catalyst material with sulfur compounds is also known in the art. For example, U.S. Patent No. 3 661 768 to Davis, Jr., et al. describe a method of regenerating a bimetallic reforming catalyst such as platinum-rhenium on alumina which includes contacting the catalyst with hydrogen sulfide to convert platinum to platinum sulfide. Prior to sulfiding, the catalyst is contacted with chlorine and steam in order to effect chlorination.

However, all of the above treatments require certain precautions owing to the corrosive nature of the halogens used. In addition, certain halogen materials employed in these processes add significantly to the cost of catalyst regeneration. In order to avoid the drawbacks associated with halogen use, it would be advantageous to reactivate catalysts in the absence of halogens. However, when deactivating coke present on a catalyst material is exposed to an oxidizing atmosphere consisting of oxygen and an inert gas, such as nitrogen, substantially all of the noble metal present on the catalyst becomes catalytically inactive.

Accordingly, the present invention provides a process for regenerating a coke-deactivated noble metal-containing zeolite catalyst material by oxidizing the coke with oxygen characterized by contacting the coked catalyst without presulfiding, with an oxygen containing gas in the presence of sulfur dioxide under oxidizing conditions to produce a de-coked catalyst and then reducing the de-coked catalyst with a conventional reducing gas under conventional reducing conditions.

The present invention relates to a process for regenerating an aged noble metal-containing zeolite catalyst material to provide a catalyst material of enhanced activity which retains a substantial portion of its noble metal in a dispersed form. The process consists essentially of oxidizing the coke on the aged catalyst material with oxygen in the presence of sulfur dioxide under suitable oxidizing conditions, and thereafter reducing the catalyst material by contact with hydrogen under suitable reducing conditions.

The aged catalyst material is treated to burn off deactivating coke materials under controlled oxidizing conditions at moderate temperatures and oxygen concentrations. Conventional oxidizing conditions include temperatures from 100 to 500°C, preferably 400 to 450°C, pressures from atmospheric to super atmospheric, preferably 800 to 2900 kPa, (100 to 400 psig), most preferably 1100 to 1800 kPa (150 to 250 psig). It is preferred that the oxidizing conditions be mild enough to prevent any alteration in the crystal structure of the zeolite being treated. The aged zeolite catalyst material is contacted with a gas stream containing oxygen as well as sulfur dioxide. Preferably, the gas stream contains 1 to 10 volume percent oxygen and 100 ppm to 2 volume percent sulfur dioxide, most preferably 1 to 3 volume percent oxygen and 0.5 to 1 volume percent sulfur dioxide. The presence of sulfur dioxide prevents or reduces agglomeration of the noble metals dispersed throughout the catalyst during the removal of coke from the zeolite catalyst material.

Dispersion of the noble metals can be measured by hydrogen chemisorption, e.g., Temperature Programmed Desorption (TPD) of hydrogen. TPD indicates the extent of noble metal agglomeration of a catalyst material. Details of this analytical technique may be found in "The Stoichiometry of Hydrogen and CO Chemisorption of Ir/ $-Al_2O_3$", Vol. 78, Journal of Catalysis, pp. 319–326, Krishnamurthy et al., (1982).

The reducing procedure which follows removal of the coke from the catalyst material utilizes any suitable reducing agent, preferably hydrogen. Reduction of the catalyst material is achieved by contacting it with the reducing agent under suitable reducing conditions. These include temperatures of 300 to 500°C, preferably 350 to 450°C and contact times ranging from about 0.5 to 10 hours, preferably about 1 to 2 hours. Where the reducing agent is in the gaseous form, e.g., hydrogen, said reduction is carried out at pressures ranging from atmospheric to 2900 kPa (400 psig), preferably 1100 to 1800 kPa (150 to 250 psig).

The zeolites which may be rejuvenated by the process of the present invention include large pore zeolites such as Zeolite Y, zeolite beta, ZSM-3, ZSM-4, ZSM-18 and ZSM-20, as well as zeolites having a constraint index of 1 to 12 and silica to alumina mole ratio greater than 12. Examples of such materials include ZSM-5, ZSM-11, ZSM-5/ZSM-11 intermediates, ZSM-12, ZSM-23, ZSM-35, ZSM-38, ZSM-48 and other similar materials.
Zeolite Y is described in U.S. Patent No. 3 130 007.
Zeolite beta is described in U.S. 3 308 069.
ZSM-3 is described in U.S. Patent No. 3 415 736.
ZSM-4 is described in U.S. Patent No. 4 021 447.
ZSM-5 is described in U.S. Patents Nos. 3 702 886 and Re 29 948.
ZSM-11 is described in U.S. Patent No. 3 709 979.
ZSM-5/ZSM-11 intermediate compositions are described in U. S. Patent No. 4 229 424.
ZSM-12 is described in U.S. Patent No. 3 832 449.
ZSM-18 is described in U.S. Patent No. 3 950 496.
ZSM-20 is described in U.S. Patent No. 3 972 983.
ZSM-23 is described in U.S. Patent No. 4 076 842.
ZSM-35 is described in U.S. Patent No. 4 016 245.
ZSM-38 is described in U.S. Patent No. 4 046 859.
ZSM-48 is described in U.S. Patent No. 4 234 231.

Particularly preferred zeolites for the purposes of the present invention are those which have high silica-to-alumina mole ratios, e.g., greater than 20 or even greater than 70 or 100.

The catalyst treated by the process of the present invention contains at least one noble metal such as platinum, palladium, iridium, osmium, rhodium, rhenium and ruthenium in amounts ranging from 0.1 to 5 wt %, preferably 0.3 to 0.9 wt %. These noble metals are generally associated with and supported on a zeolite catalyst. The process may also be used to regenerate multimetallic catalysts which contain one of the above noble metals and another metal selected from Groups IB, IVB, VIIA, or VIII of the Periodic Table. The zeolite catalyst treated can be binder free or it may contain an inorganic oxide binder such as alumina, silica, silica-alumina, magnesia, titania, zirconia, or thoria.

## Example 1

A catalyst material of zeolite beta comprising 35 wt % alumina and 0.59 wt % platinum was exposed to hydrocarbon conversion conditions resulting in a coke build-up thereon. After deoiling for a half hour in hydrogen, the deactivated catalyst was regenerated by exposure to a gas containing 96.3 wt % $N_2$, 3 wt % $O_2$ and 0.7 wt % $SO_2$ at 400 to 450°C for about 0.5 to 2 hours at about atmospheric pressure in order to burn off the coke. The regenerated catalyst was thereafter reduced for one hour at 450°C in hydrogen. The resulting catalyst was measured by hydrogen chemisorption for platinum dispersion. The regenerated catalyst had a platinum dispersion of 0.2 compared with a dispersion of 0.57 for a fresh catalyst.

## Example 2

A 10 g sample of the coked catalyst of Example 1 was regenerated by contact with a mixture containing 97 volume percent $N_2$ and 3 volume percent $O_2$ at 400 to 450°C to achieve coke burn-off. The regenerated catalyst was thereafter reduced for one hour at 450°C in hydrogen. Platinum dispersion as measured by hydrogen chemisorption was 0.

A comparison of Examples 1 and 2 indicates that the addition of sulfur dioxide to the oxygen used in regeneration of the zeolite in the present invention is effective in retaining a significant portion of the initial Pt dispersion of a catalyst which would otherwise be lost by conventional regeneration treatment.

## Claims

1. A process for regenerating a coke-deactivated noble metal-containing zeolite catalyst material by oxidizing the coke with oxygen characterized by contacting the coked catalyst, without presulfiding, with an oxygen containing gas in the presence of sulfur dioxide under oxidizing conditions to produce a de-coked catalyst and then reducing the de-coked catalyst with a conventional reducing gas under conventional reducing conditions.

2. The process of claim 1 further characterized in that the oxidizing conditions include temperatures of 100 to 500°C, pressures from atmospheric to 2900 kPa (400 psig), and exposure to a gas stream containing about 100 ppm to 2 volume percent $SO_2$ and 1 to 10 volume percent oxygen.

3. The process of claim 2 further characterized in that the temperature is 400 to 450°C, the pressure is 1100 to 1900 kPa (150 to 250 psig) and the oxygen containing gas contains 0.5 to 1 volume percent sulfur dioxide and 1 to 3 volume percent oxygen.

4. The process of any preceeding claim further characterized in that the framework silica to alumina mole ratio of the zeolite is at least 20.

5. The process of any preceeding claim 1 wherein the catalyst contains a zeolite having a constraint index ranging from 1 to 12 and a silica to alumina mole ratio of at least 12.

6. The process of any of claims 1 to 4 wherein the zeolite is zeolite beta.

7. The process of any preceeding claim wherein the zeolite contains 0.1 to 5 wt % platinum, palladium, iridium, osmium, rhodium, rhenium and ruthenium.

## Revendications

1. Un procédé de régénération d'un catalyseur zéolitique contenant un métal noble désactivé par du coke, consistant à oxyder le coke avec de l'oxygène, caractérisé en ce que l'on met le catalyseur cokéfié au contact, sans présulfuration, d'un gaz contenant de l'oxygène, en présence de dioxyde de soufre, dans des conditions oxydantes, pour produire un catalyseur décokéfié puis réduit le catalyseur décokéfié résultant à l'aide d'un gaz réducteur classique dans des conditions réductrices classiques.

2. Le procédé selon la revendication 1, caractérisé en outre en ce que les conditions oxydantes incluent des températures comprises entre 100 et 500°C, des pressions comprises entre la pression atmosphérique et 2900 kPa (400 psig), et une exposition à un courant gazeux contenant environ 100 ppm à 2% en volume de $SO_2$ et de 1 à 10% en volume d'oxygène.

3. Le procédé selon la revendication 2, caractérisé en outre en ce que la température est comprise entre 400 et 450°C, la pression entre 1100 et 1900 kPa (150 à 250 psig) et le gaz contenant de l'oxygène contient de 0,5 à 1 volume% de dioxyde de soufre et de 1 à 3% en volume d'oxygène.

4. Le procédé selon l'une quelconque des revendications précédentes, caractérisé en outre en ce que, dans la structure de la zéolite, le rapport molaire silice/alumine est d'au moins 20.

5. Le procédé selon la revendication 1, dans lequel le catalyseur contient une zéolite présentant un indice de contrainte compris entre 1 et 12 et un rapport molaire silice/alumine d'au moins 12.

6. Le procédé selon l'une quelconque des revendications 1 à 4, dans lequel la zéolite consiste en zéolite béta.

7. Le procédé selon l'une quelconque des revendications précédentes, dans lequel la zéolite contient de 0,5 à 5% en poids de platine, de palladium, d'iridium, d'osmium, de rhodium de rhénium ou de ruthénium.

## Patentansprüche

1. Verfahren zur Regenerierung eines durch Koks deaktivierten Edelmetall enthaltenden Zeolithkatalysatormaterials durch Oxidation des Koks mit Sauerstoff, gekennzeichnet durch den Kontakt des verkokten Katalysators ohne Vorsulfidierung mit einem sauerstoffhaltigen Gas in Gegenwart von Schwefeldioxid bei Oxidationsbedingungen, um einen entkokten Katalysator herzustellen, und anschließende Reduzierung dieses entkokten Katalysators mit einem herkömmlichen reduzierenden Gas bei herkömmlichen Reduktionsbedingungen.

2. Verfahren nach Anspruch 1 weiterhin dadurch gekennzeichnet, daß die Oxidationsbedingungen Temperaturen von 100 bis 500°C, einen Druck vom atmospherischen Druck bis 2900 kPa (400 psig) und ein Aussetzen gegenüber einem Gasstrom, der etwa 100 ppm bis 2 Vol.-% $SO_2$ und 1 bis 10 Vol.-% Sauerstoff enthält, umfassen.

3. Verfahren nach Anspruch 2, weiterhin dadurch gekennzeichnet, daß die Temperatur 400 bis 450°C beträgt, der Druck 1100 bis 1900 kPa (150 bis 250 psig) ist und das sauerstoffhaltige Gas 0,5 bis 1 Vol.-% Schwefeldioxid und 1 bis 3 Vol.-% Sauerstoff enthält.

4. Verfahren nach einem der vorstehenden Ansprüche weiterhin dadurch gekennzeichnet, daß das Gittermolverhältnis von Siliziumdioxid zu Aluminiumoxid des Zeolith mindestens 20 beträgt.

5. Verfahren nach einem der vorstehenden Ansprüche, worin der Katalysator einen Zeolith mit einem Zwangsindex im Bereich von 1 bis 12 und einem Siliziumdioxid/Aluminiumoxid-Molverhältnis von mindestens 12 enthält.

6. Verfahren nach Anspruch 1 bis 4, worin der Zeolith Zeolith-Beta ist.

7. Verfahren nach einem der vorstehenden Ansprüche, worin der Zeolith 0,1 bis 5 Gew.-% Platin, Palladium, Iridium, Osmium, Rhodium, Rhenium und Ruthenium enthält.